## Europäisches Patentamt

## European Patent Office

## Office européen des brevets

(19)

(11) Veröffentlichungsnummer : **0 171 449**
B1

(12) EUROPÄISCHE PATENTSCHRIFT

(45) Veröffentlichungstag der Patentschrift :
27.07.88

(51) Int. Cl.⁴ : **F 02 D 23/02**, F 02 B 39/10,
F 02 B 39/08, F 02 M 51/02

(21) Anmeldenummer : 84109685.2

(22) Anmeldetag : 14.08.84

(54) Verfahren und Vorrichtung zum Zuführen von Kraftstoff und Luft zu einer Verbrennungskraftmaschine.

(43) Veröffentlichungstag der Anmeldung :
19.02.86 Patentblatt 86/08

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
DE-A- 2 504 960
DE-A- 3 201 756
FR-A- 2 251 710

(73) Patentinhaber : LATIMER N.V.
De Ruyterkade 62 P.O. Box 812
Curaçao Netherlands Antilles (NL)

(72) Erfinder : Garcia Cascajosa, Felix
Calle Padre Damian 37 Appartement 3h
Madrid (ES)

(74) Vertreter : Patentanwälte Grünecker, Dr. Kinkeldey,
Dr. Stockmair, Dr. Schumann, Jakob, Dr. Bezold,
Meister, Hilgers, Dr. Meyer-Plath
Maximilianstrasse 58
D-8000 München 22 (DE)

# 0 171 449

## Beschreibung

Die Erfindung bezieht sich auf ein Verfahren der im Oberbegriff des Anspruchs 1 genannten Art und auf eine Vorrichtung gemäß dem Oberbegriff des Anspruchs 6 oder 10 zum Zuführen von Kraftstoff und Luft zu einer Verbrennungskraftmaschine.

Es sind bereits Verfahren zum Zuführen von Kraftstoff und Luft zu einer Verbrennungskraftmaschine bekannt, bei welchen die Verbrennungskraftmaschine Verbrennungsluft durch ein Ansaugrohr ansaugt, in welchem eine Drosselklappe angeordnet ist. Die Drosselklappe ist dabei mit einem Gaspedal gekoppelt, so daß der Öffnungsgrad der Drosselklappe die Größe des freien Strömungsquerschnitts des Ansaugrohrs und somit die Menge der angesaugten Luft bestimmt. Eine Beschleunigung oder Verzögerung der Drehzahl der Verbrennungskraftmaschine wird somit über die Stellung der Drosselklappe gesteuert. Bei den vorbekannten Verfahren erfolgt eine Messung der durch die Stellung der Drosselklappe bestimmten Verbrennungsluftmenge, welche als Eingangsgröße in einen separaten Regelkreis eingegeben wird. Dieser Regelkreis bestimmt dann, in Abhängigkeit von dieser Eingangsgröße, die Menge an Kraftstoff, welcher dem Motor mittels einer Einspritzdüse zugeführt werden muß, um ausreichende Betriebsbedingungen für die Verbrennungskraftmaschine zu schaffen. Diese vorbekannten Verfahren arbeiten somit in Abhängigkeit von der Menge an Verbrennungsluft, welche der Motor ansaugt und regeln dazu passend die benötigte Kraftstoffmenge. Bei bekannten Vorrichtungen zum Durchführen dieser Verfahren ist jeweils stromaufwärts der Drosselklappe ein Luftmengenmesser vorgesehen, der zur Ermittlung der von dem Motor angesaugten Luftmenge dient. Dieser Luftmengenmesser gibt entweder eine mechanische oder eine elektrische Stellgröße ab, welche einer entsprechenden Regelung zugeführt wird. Unabhängig von der Regelung und unabhängig von der Drosselklappe beaufschlagt eine Kraftstoffpumpe die stromauf des Einspritzventils angeordnete Kraftstoffleitung mit einem geeigneten Kraftstoffdruck. Dieser Kraftstoffdruck liegt, unabhängig von den Betriebsbedingungen der Verbrennungskraftmaschine, in stets gleichbleibender Höhe vor. Die Regelung wirkt in mechanischer oder elektronischer Weise mit dem Einspritzventil zusammen und bestimmt dessen Öffnungszeit in Abhängigkeit von der angesaugten Luftmenge. Es liegt somit diesen vorbekannten Verfahren der Gedanke zugrunde, in Abhängigkeit einer Motorbetriebsgröße (angesaugte Luftmenge) eine zweite Betriebsgröße (benötigte Kraftstoffmenge) zu regeln. Die bekannten Vorrichtungen zur Durchführung dieser Verfahren sehen deshalb stets eine Luftmengenmessung vor, welche über die Regeleinrichtung die Öffnungszeit eines Einspritzventils beeinflußt, durch welches ein mit einem konstanten Druck vorliegender Kraftstoff eingespritzt wird. Die Kraftstoffpumpe selbst und der Druck des Kraftstoffs in der Kraftstoffleitung sind somit nicht unmittelbar an diesem Verfahren beteiligt. Diese vorbekannten Verfahren weisen eine Reihe schwerwiegender Nachteile auf. Die zur Durchführung dieser Verfahren benötigten Luftmengenmesser sind ausgesprochen kompliziert und störanfällig und erlauben keine fehlerfreie Messung der angesaugten Verbrennungsluft, da Schwankungen in der Lufttemperatur und Beeinflussungen durch sich verändernde Strömungsverhältnisse nicht ausgeschlossen werden können. Vor allem im Leerlauf und bei Maximaldrehzahl der Verbrennungskraftmaschine ist eine genaue Messung der Luftmenge und eine enstprechende Dosierung der Kraftstoffmenge kaum möglich. Weiterhin beeinflußt die Trägheit der verwendeten Luftmengenmesser die Ansprechzeit der Regelung und erzeugt damit eine nicht unerhebliche Betriebsdauer der Maschine, z. B. beim Beschleunigen oder beim Wegnehmen des Gases, in welcher die Menge des eingespritzten Kraftstoffes in einem unerwünschten Verhältnis zu der Menge der von dem Motor angesaugten Verbrennungsluft steht. Insgesamt sind die zur Durchführung der bekannten Verfahren zum Zuführen von Kraftstoff und Luft zu einer Verbrennungskraftmaschine zur Anwendung kommenden Vorrichtungen äußerst kompliziert, wodurch sich nicht nur die Herstellungskosten, sondern auch der Wartungsaufwand beträchtlich erhöhen.

Es sind auch Verfahren zum Zuführen von Kraftstoff und Luft zu einer Verbrennungskraftmaschine bekannt, bei welchen die Verbrennungsluft mittels eines Verdichters oder eines Kompressors mit einem entsprechenden Druck beaufschlagt wird. Die Kompressoren bzw. Verdichter arbeiten jedoch entweder völlig getrennt von der Drehzahl der Verbrennungskraftmaschine oder sie sind direkt mit der Kurbelwelle der Verbrennungskraftmaschine verbunden, so daß sie im Ansaugrohr einen bestimmten Luftdruck erzeugen, welcher nicht im Einklang steht mit der von der Verbrennungskraftmaschine angesaugten Luftmenge. Es ergibt sich somit auch hier die Notwendigkeit, mittels einer mit einem Gaspedal gekoppelten Drosselklappe die der Verbrennungskraftmaschine zuzuführende Luftmenge zu steuern. Bei diesen Verfahren sind die zur Bestimmung und Einspritzung der benötigten Kraftstoffmenge erforderlichen Meß- und Regelungsvorgänge äußerst kompliziert und störanfällig. Insbesondere ist es auch bei den diesen Verfahren zugrundeliegenden Vorrichtungen notwendig, den Kraftstoff mit einer separaten Kraftstoffpumpe unter Druck einer Kraftstoffleitung zuzuführen. Diese Vorrichtungen weisen somit zwei voneinander separate Pumpen, eine für den Kraftstoff und eine für die Verbrennungsluft auf. Die Wirkungsweise dieser beiden Pumpen kann nicht koordiniert werden, um ein gewünschtes Verhältnis zwischen Verbrennungsluft und Kraftstoff zu erhalten.

Aus der DE-A-32 01 756 ist ein Verfahren zum Steuern einer Brennkraftmaschine bekannt, gemäß dem der Brennkraftmaschine Kraftstoff zugeführt wird, welcher mittels jeweils eines Kraftstoffeinspritzventils in den Brennraum eingespritzt wird. Die einzuspritzende Kraftstoffmenge wird mittels einer Steuereinheit bestimmt. Die Luftzuführung zu der Brennkraftmaschine erfolgt mittels eines durch die Abgase über ein Turbinenrad angetriebenen Vorverdichters. In der Zuleitung für die Verbrennungsluft ist ein Sensor für die Ansaugluftmenge angeordnet, dessen Ausgangssignale der Steuereinheit zugeführt werden. Die Steuereinheit errechnet auf der Basis der von dem Sensor abgegebenen Werte die jeweils benötigte Kraftstoffmenge. Das aus dieser Druckschrift bekannte Verfahren sieht somit vor, daß die Brennkraftmaschine eine beliebige Luftmenge ansaugt, deren Betrag von der Drehzahl des Vorverdichters abhängt und daß dann die zu dieser Luftmenge passende Kraftstoffmenge berechnet und zugeführt wird.

Aus der FR-A-22 51 710 ist ein mit einem Kompressor versehener Verbrennungsmotor bekannt, bei welchem der Verdichter mit der Kurbelwelle des Motors fest verbunden ist. Dem Motor wird somit in Abhängigkeit von seinem Ansaugverhalten und in Abhängigkeit von seiner Kurbelwellendrehzahl Verbrennungsluft zugeführt. Die Luftmenge ist mittels eines Drosselventils vorbestimmbar, dessen Stellung die mittels einer Einspritzpumpe eingespritzte Kraftstoffmenge beeinflußt.

Der Erfindung liegt die Aufgabe zugrunde, ein Verfahren und eine Vorrichtung zum Zuführen von Kraftstoff und Luft zu einer Verbrennungskraftmaschine zu schaffen, welche bei einfacher und betriebssicherer Wirkungsweise unter allen Betriebsbedingungen eine zuverlässige Zuführung von Kraftstoff und Luft in einem gewünschten Mengenverhältnis gewährleistet. Diese Aufgabe wird hinsichtlich des Verfahrens erfindungsgemäß durch die Merkmalskombination des Anspruchs 1 gelöst.

Das erfindungsgemäße Verfahren hat gegenüber dem Stand der Technik wesentliche Vorteile. Durch die gleichzeitige zwangsweise Zuführung von Kraftstoff und Luft in einem vorgegebenen Verhältnis wird sichergestellt, daß die Verbrennungskraftmaschine stets unter optimalen Betriebsbedingungen arbeitet. Auf diese Weise wird erreicht, daß eine vorbestimmbare Verbrennung in den Verbrennungskammern abläuft, welche zu einem Ausstoß an Schadstoffen führt, der sich auf einem absolut minimalen Niveau bewegt. Der Ausstoß an Kohlenwasserstoffen unterschreitet dabei bei weitem die derzeit gültigen Vorschriften. Durch die Zuführung einer der jeweiligen Stellung der Drosselklappe entsprechenden Luftmenge wird erreicht, daß der Motor in Abhängigkeit von der gewünschten Leistung arbeitet. Die Zuführung der Luftmenge und der Kraftstoffmenge sind somit nicht von einer durch den Motor selbst vorgegebenen Eingangsgröße, nach welcher mit Hilfe einer Regelung eine zweite Größe bestimmt wird, abhängig. Vielmehr wird bei dem erfindungsgemäßen Verfahren zwangsweise, ohne das Saugverhalten des Motors zu berücksichtigen, sowohl Kraftstoff als auch Verbrennungsluft in einer vorbestimmten Menge und in einem vorbestimmten Verhältnis zugeführt.

Eine vorteilhafte Ausgestaltung des erfindungsgemäßen Verfahrens ist dadurch gegeben, daß das Verhältnis von Kraftstoffmenge zu Luftmenge während des Betriebs der Verbrennungskraftmaschine konstant bleibt. Dieses konstante Verhältnis wirkt sich besonders bei Beschleunigungsoder Verzögerungsvorgängen der Verbrennungskraftmaschine vorteilhaft aus. Die Ansprechzeit der Verbrennungskraftmaschine bei gewünschten Veränderungen ihrer Drehzahl oder ihrer Leistung erniedrigt sich gegenüber Motoren, die nach Verfahren nach dem Stand der Technik arbeiten, beträchtlich, da die Maschine sofort mit der ausreichenden Kraftstoffmenge versorgt wird und nicht abgewartet werden muß, bis sich das Luftansaugverhalten der Maschine ändert, um dann erst die Menge des einzuspritzenden Kraftstoffs neu dosieren zu können. Das erfindungsgemäße Verfahren versorgt den Motor auch bei Leerlaufbedingungen mit einer optimalen Menge an Kraftstoff und Verbrennungsluft, so daß eine Schädigung des Motors oder eine Störung des Betriebsablaufes durch zu fettes oder zu mageres Gemisch unmöglich wird. Durch das stets konstante Mengenverhältnis kann auch ein extrem niedriger Kraftstoffverbrauch erzielt werden, da der Verbrennungskraftmaschine unter keinen Umständen mehr Kraftstoff zugeführt wird, als sie zur optimalen Verbrennung benötigt. Auch bei Maximaldrehzahlen der Verbrennungskraftmaschine wird diese unter optimalen Bedingungen betrieben, so daß eine Schädigung durch zu mageres Gemisch und die als Folge davon auftretende Motorüberhitzung in absolut sicherer Weise vermieden wird.

Mit Vorteil ist das Verfahren gemäß der Erfindung auch so ausgestaltet, daß das Verhältnis von Kraftstoffmenge zu Luftmenge bis zum Erreichen einer vorgegebenen Motortemperatur auf einen fetteren Wert eingestellt ist. Eine nach diesem Verfahren betriebene Verbrennungskraftmaschine weist ein ausgesprochen vorteilhaftes Kaltstartverhalten und ebensolche Kaltlaufeigenschaften auf. Besonders vorteilhaft ist dabei, daß bis zum Erreichen der vorgegebenen Motortemperatur unter allen Betriebsbedingungen, d. h. sowohl in der Leerlaufphase als auch bei höheren Drehzahlen ein stets konstantes Verhältnis von Kraftstoff zu Luftmenge zugeführt wird. Dadurch wird auf einfachste Weise ein optimaler Lauf der Maschine sichergestellt und die Gefahr des Absterbens der Maschine oder des Verrußens der Kerzen durch plötzliche Änderungen des Mischungsverhältnisses ausgeschlossen.

Mit Vorteil ist das erfindungsgemäße Verfahren auch so ausgestaltet, daß die Gesamtmenge von Kraftstoff und Luft und die Stellung der Drosselklappe zueinander direkt proportional sind. Dies bringt den Vorteil mit sich, daß der Motor ein stets optimales Ansaugverhalten zeigt, da die Drosselklappe stets einen Strömungsquerschnitt der Größe freigibt, welcher zum Einströmen der vorbestimmten Luftmenge benötigt wird. Es treten somit im Ansaugkanal keine durch den Motor verursachte Druckänderungen auf, welche den Einströmvorgang stören könnten.

Eine günstige Ausgestaltung des erfindungsgemäßen Verfahrens wird auch dadurch erreicht, daß das Verhältnis von Kraftstoff zu Luft ein stöchiometrisches Verhältnis ist. Somit wird sichergestellt, daß unter allen Betriebsbedingungen eine vollständige Verbrennung des Kraftstoffs erfolgt und die chemischen Abläufe bei der Verbrennung den höchstmöglichen Wirkungsgrad aufweisen.

Hinsichtlich der Vorrichtung wird die Aufgabe durch die Merkmalskombination des Anspruchs 6 gelöst. Derartige Pumpen sind prinzipiell aus dem US-Patent 4 110 059 bekannt. Der erfindungsgemäßen Pumpe liegt das Prinzip zugrunde, einen Elektromotor vorzusehen, dessen relativ zueinander bewegbare Bauteile, welche einem Rotor bzw. einem Stator eines herkömmlichen Elektromotors entsprechen, beide frei drehbar in einer feststehenden Lagerung angeordnet sind. Zur Vereinfachung der Beschreibung der Funktionsweise wird in der nachfolgenden Beschreibung die Bezeichnung Stator und Rotor beibehalten.

Eine Beaufschlagung mit Strom bewirkt eine Drehung des Rotors und des Stators in entgegengesetzter Richtung gegeneinander, ohne auf die Lagerung Drehmomente zu übertragen. Die relative Drehzahl des Rotors und des Stators zueinander wird durch die Bauart des Elektromotors bestimmt, insofern folgt dieser Elektromotor denselben konstruktiven Grundlagen wie ein konventioneller Elektromotor mit feststehendem Stator und drehbarem Rotor. Bei entsprechender baulicher Ausgestaltung des aus einem drehbaren Rotor und einem drehbaren Stator bestehenden Elektromotors liegt deshalb zwischen diesen beiden Teilen eine stets konstante relative Drehzahl vor. Ein Abbremsen eines dieser beiden Teile führt zu einer Drehzahlerhöhung des anderen Teils. Bei der erfindungsgemäßen Pumpe sind der Rotor und der Stator jeweils Teil eines Pumpenrades wobei das eine Pumpenrad Teil einer Kraftstoffpumpe und das andere Pumpenrad Teil eines Luftverdichters ist. Diese erfindungsgemäße Pumpvorrichtung stellt somit eine Doppelpumpe für Kraftstoff und Verbrennungsluft dar. Die Leistung der Kraftstoffpumpe bzw. der Verdichterpumpe ergibt sich aus der Multiplikation ihrer Drehzahl mit ihrem Drehmoment. Bei Drosselung eines dieser beiden Pumpen, z. B. durch Verschließen des Austrittskanals, wird sie eine geringere Leistung erbringen, was sich durch einen Anstieg der Drehzahl und ein Absinken des Drehmoments bemerkbar macht. Da das Drehmoment jeder Pumpe gleich ist und die Drehmomente der beiden Pumpen einander entgegengesetzt sind und außerdem die Gesamtdrehzahl bzw. die Gesamtgeschwindigkeit der beiden Pumpenteile gegeneinander konstant bleibt, wird bei der erwähnten Drosselung der einen Pumpe die andere Pumpe ihre Drehzahl verringern und ebenfalls ein geringeres Drehmoment aufbringen und damit eine geringere Pumpleistung erzeugen. Diese geringere Pumpleistung ist direkt proportional zur Leistung der anderen Pumpe. Somit stellt die erfindungsgemäße Pumpvorrichtung eine Vorrichtung dar, welche zwei voneinander unabhängige Medien pumpt, welche in einem stets gleichen Mengenverhältnis zueinander stehen. Dieses Mengenverhältnis ist unabhängig von äußeren Einflüssen und wird unter allen Betriebsbedingungen aufrechterhalten. Das Mengenverhältnis von Kraftstoff zu Luft ist somit lediglich bedingt durch die Bauart der Pumpvorrichtung und völlig frei von den auf die Pumpe einwirkenden Betriebsparametern. Gleichwohl kann eine Änderung des Volumenverhältnisses durch entsprechende mechanische oder elektrische Einwirkungen auf die gesamte Pumpvorrichtung erreicht werden.

Die erfindungsgemäße Pumpvorrichtung mit der in sie integrierten Kraftstoffpumpe und dem Verbrennungsluftverdichter stellt somit ein System dar, welches eine systemimmanente Regelung beinhaltet, welche nicht durch von außen wirkende Parameter, insbesondere nicht durch Betriebsgrößen der Verbrennungskraftmaschine oder irgendwelche Störgrößen beeinflußt wird. Die gesamte Vorrichtung zum Zuführen von Kraftstoff und Luft zu einem Verbrennungsmotor benötigt somit keine Elektronik und muß keine sonstigen Einflußgrößen berücksichtigen. Weiterhin kann die Vorrichtung auf sämtliche zusätzlichen baulichen Maßnahmen, wie sie bei konventionellen Vorrichtungen etwa zur Aufrecherhaltung eines entsprechenden Leerlaufverhaltens der Verbrennungskraftmaschine nötig sind, verzichten. Ebenso ist es unmöglich, daß die Maschine, z. B. im Leerlauf oder bei abruptem Gasgeben durch eine zu große geförderte Kraftstoffmenge absäuft. Auch eine Betriebsstörung durch Veränderung der Strömungsverhältnisse der Verbrennungsluft, wie sie bei nach dem Venturiprinzip arbeitenden Einströmkanälen durch Vereisung auftreten können, sind gänzlich ausgeschlossen. Als weiterer großer Vorteil erweist es sich, daß eine Synchronisierung der Vorrichtung nicht notwendig ist, da das gesamte Betriebsverhalten lediglich von der Bauart der Pumpvorrichtung abhängt. Das Verhältnis zwischen der dem Motor zuzuführenden Verbrennungsluft und dem dazu erforderlichen Kraftstoff wird somit bei der Konstruktion der Pumpvorrichtung festgelegt und ändert sich während der gesamten Lebensdauer der Pumpvorrichtung nicht. Dadurch erniedrigen sich die Wartungs- und Instandhaltungskosten um ein beträchtliches, da eine Nachjustierung unter keinen Umständen erforderlich ist. Wird die Versorgung der erfindungsgemäßen Vorrichtung mit Kraftstoff oder Verbrennungsluft, z. B. durch verstopfte oder in ihrem Querschnitt reduzierte Filter gestört, so führt dies lediglich zu verminderter Leistung der Verbrennungskraftmaschine. Da z. B. bei einer verringerten Kraftstoffmenge auch eine dem festgesetzten Verhältnis entsprechende geringere Verbrennungsluftmenge zugeführt wird, ist eine Schädigung des Motors völlig ausgeschlossen. Die verringerte Leistung kann auch von einer ungeübten Wartungsperson festgestellt und deren Ursachen leicht behoben werden. Ein weiterer wesentlicher Vorteil der erfindungsgemäßen Vorrichtung ergibt sich daraus, daß die üblicherweise mit Vorrichtungen nach dem Stand der Technik nur schwer kompensierbaren Einflüsse von Luftdruck, Luftdichte und Lufttemperatur keinen Einfluß auf das Verhalten der erfindungsgemäßen Pumpvorrichtung ausüben. Eine Dichteänderung der Luft z. B. führt, wegen des stets gleichbleibenden Drehmoments der beiden Pumpenräder gegeneinander, auch zu einer entsprechend geringeren geförderten Kraftstoffmenge.

Weiterhin weist die erfindungsgemäße Vorrichtung zum Zuführen von Kraftstoff und Luft zu einer Verbrennungskraftmaschine gegenüber Vorrichtungen nach dem Stand der Technik erhebliche Kostenvorteile auf. Die Herstellungskosten betragen etwa ein Drittel der Kosten eines einfachsten Vergasers und ein Zwölftel der Kosten eines Einspritzsystems. Wegen der geringen Störanfälligkeit und der geringen Zahl an betriebswichtigen Bauteilen erniedrigen sich sowohl die Zahl als auch die Kosten für benötigte Ersatzteile.

Weiterhin zeichnet sich die erfindungsgemäße Vorrichtung durch den Vorteil aus, daß sie Zusätzlich zur Kraftstoffeinspritzung einen Verbrennungsluftverdichter aufweist, der wegen des oben beschriebenen Verhaltens allen bekannten Kompressoren oder Verdichtern überlegen ist, da er stets nur die Luftmenge fördert, die die Verbrennungskraftmaschine benötigt.

Eine günstige Ausgestaltung der erfindungsgemäßen Vorrichtung ist auch dadurch gegeben, daß die Pumpenräder in elektrischer Verbindung mit einem die Stellung der Drosselklappe bestimmenden Stellglied stehen und daß das Stellglied in Form eines mit einem Gaspedal gekoppelten Potentiometers ausgebildet ist. Auf diese Weise läßt sich bei einfachstem Aufbau und geringsten Kosten eine Koppelung durch Parallelschaltung zwischen der Drosselklappe und dem die Gesamtdrehzahl der Pumpvorrichtung bestimmenden Stellglied erreichen. Eine Veränderung der Stellung des Gaspedal gibt somit mittels des Potentiometers die Gesamtdrehzahl, d. h. die Relativdrehzahl zwischen den beiden Pumpenrädern der Pumpvorrichtung vor und bewegt zugleich die Drosselklappe in eine entsprechende Stellung, um die Zuströmung der geförderten Verbrennungsluftmenge zu ermöglichen. Auf diese Weise kann eine Erhöhung bzw. Erniedrigung der Drehzahl der Verbrennungskraftmaschine auf sehr einfache Weise und absolut betriebssicher erreicht werden.

Eine vorteilhafte Ausgestaltung der erfindungsgemäßen Vorrichtung ist auch dadurch gegeben, daß die Verbrennungskraftmaschine mit einer an sich bekannten Abgasturbine ausgestattet ist, welche in Betriebsverbindung mit einem Generator steht und daß der aus dem Rotor und dem Stator gebildete Elektromotor in Verbindung mit dem Generator und einer Batterie steht. Durch diese Ausgestaltung kann die in dem Abgas des Motors enthaltene Energie auf sehr einfache Weise zur Versorgung der Verbrennungskraftmaschine mit Kraftstoff und Verbrennungsluft eingesetzt werden. Der Generator kann somit unter bestimmten Betriebsbedingungen und bei entsprechender baulicher Ausgestaltung des Verbrennungskraftmotors eine konventionelle Lichtmaschine überflüssig machen.

Hinsichtlich der Vorrichtung wird die Aufgabe auch durch die Merkmalskombination des Anspruchs 10 gelöst.

Eine derartige Vorrichtung weist, zusätzlich zu der oben in Verbindung mit der einen Elektromotor bildenden Pumpvorrichtung den Vorteil auf, daß der Antrieb dieser Pumpvorrichtung hydraulisch erfolgt. Ein derartiger hydraulischer Antrieb ist äußerst betriebssicher und zuverlässig und kann unter Zuhilfenahme handelsüblicher Bauteile auf einfachste Weise realisiert werden.

Mit Vorteil ist die erfindungsgemäße Vorrichtung so ausgestaltet, daß die Pumpenräder in hydraulischer Verbindung mit einem die Stellung der Drosselklappe bestimmenden Stellglied stehen und daß das Stellglied in Form eines mit einem Gaspedal gekoppelten Drosselventils ausgebildet ist. Die Anwendung eines Drosselventils zur Veränderung der Drehzahl der durch den Hydromotor angetriebenen Pumpvorrichtung ist ausgesprochen einfach, kostengünstig zu realisieren und absolut betriebssicher. Die Koppelung des durch das Drosselventil gebildeten Stellglieds mit der Drosselklappe ist analog der oben beschriebenen Koppelung der Drosselklappe mit einem Potentiometer zur Drehzahlregelung der elektrisch betriebenen Pumpvorrichtung.

Eine besonders vorteilhafte Ausgestaltung der erfindungsgemäßen Vorrichtung ist dadurch gegeben, daß die Verbrennungskraftmaschine mit einer an sich bekannten Abgasturbine ausgestattet ist, welche in Betriebsverbindung mit einer Hydraulikmittelpumpe steht und daß die Hydraulikmittelpumpe in Betriebsverbindung mit dem Hydromotor bringbar ist. Auf diese Weise kann der Hydromotor unter Ausnutzung der in dem Abgas befindlichen Energie angetrieben werden, so daß während des Betriebs der Verbrennungskraftmaschine die Anwendung einer zusätzlichen Hydraulikmittelpumpe unnötig werden kann.

Eine besonders günstige Ausbildung der erfindungsgemäßen Vorrichtungen ist auch dadurch gegeben, daß das Verdichterrad mit einer elektrischen Magnetbremse in Wirkzusammenhang bringbar ist, welche in Abhängigkeit von der Zylinderkopftemperatur der Verbrennungskraftmaschine erregbar ist. Bei Inbetriebnahme der Verbrennungskraftmaschine, d. h. bei Kaltstart oder Kaltlaufbedingungen wird die elektrische Magnetbremse erregt und bremst das Verdichterrad in entsprechender Weise um einen gewissen Betrag ab, so daß das bauartbedingte Mengenverhältnis von Kraftstoff zu Verbrennungsluft derart verändert wird, daß während dieser Kaltlaufphase ein stets gleichbleibendes Verhältnis von Kraftstoff zu Verbrennungsluft vorliegt, bei welchem eine grössere Menge an Kraftstoff vorliegt als bei der ungebremsten Betriebsweise der Pumpvorrichtung. Die Anwendung einer Magnetbremse ist eine absolut betriebssichere, verschleißfreie und billige Möglichkeit, während der Kaltlaufphase der Verbrennungskraftmaschine den Anteil an Kraftstoff zu erhöhen.

Im folgenden wird das erfindungsgemäße Verfahren anhand von Ausführungsbeispielen in Verbindung mit der Zeichnung beschrieben. Dabei zeigt :

Figur 1 eine schematische Darstellung einer Verbrennungskraftmaschine mit einer in Form eines Elektromotors ausgebildeten erfindungsgemäßen Pumpvorrichtung,

Figur 2 eine vergrößerte schematische Darstellung der als Elektromotor ausgebildeten erfindungsgemäßen Pumpvorrichtung,

Figur 3 eine schematische Darstellung einer mit einer Abgasturbine versehen, mit der erfindungsgemäßen, einen Elektromotor bildende Pumpvorrichtung ausgerüsteten Verbrennungskraftmaschine,

Figur 4 eine schematische Darstellung einer mit einer erfindungsgemäßen hydraulischen Pumpvorrichtung versehenen Verbrennungskraftmaschine,

Figur 5 eine vergrößerte, schematische Darstellung einer einen Hydromotor bildenden erfindungsgemäßen Pumpvorrichtung,

Figur 6 eine schematische Darstellung einer mit einer Abgasturbine versehenen und mit einer erfindungsgemäßen, einen Hydromotor bildenden Pumpvorrichtung ausgestattete Verbrennungskraftmaschine,

Figur 7 ein Diagramm, das die Ansprechzeit in Abhängigkeit der Umlaufgeschwindigkeit der Pumpvorrichtung darstellt.

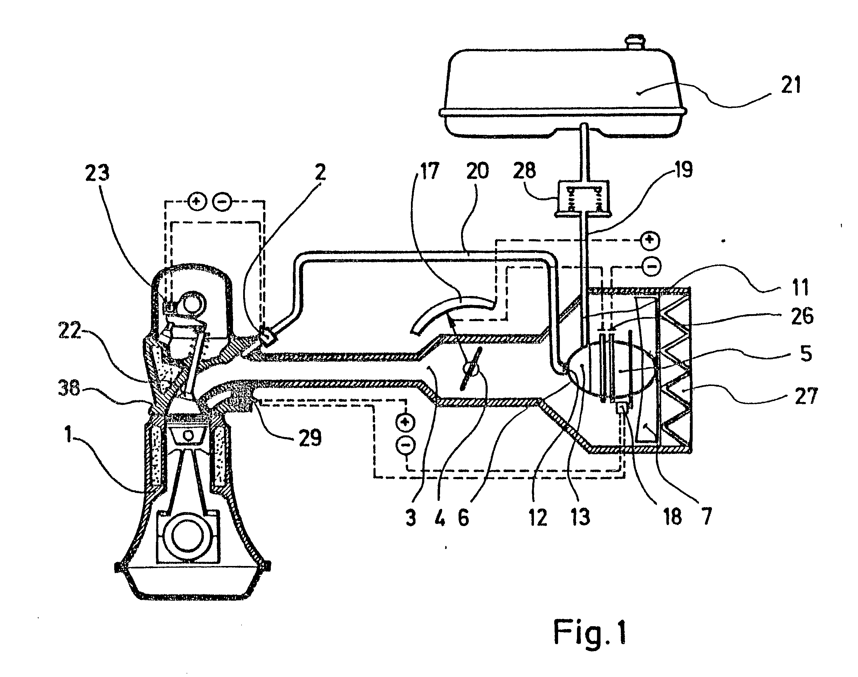

In Fig. 1 ist in schematischer Darstellung eine Verbrennungskraftmaschine 1 aufgezeigt, welche in üblicher Weise eine nicht näher dargestellte Kurbelwelle und mindestens einen Zylinder aufweist, in welchem mittels eines Pleuels ein Kolben bewegbar ist. Die Verbrennungskraftmaschine 1 weist in üblicher Weise einen Zylinderkopf 38 auf, in welchem pro Zylinder mindestens ein Einlaßventil 22 sowie mindestens ein in Fig. 1 nicht dargestelltes Auslaßventil sowie mindestens eine ebenfalls nicht dargestellte Zündkerze angeordnet sind. Der Zylinderkopf 38 der Verbrennungskraftmaschine 1 steht in Verbindung mit einem Ansaugrohr 3, in welchem eine Drosselklappe 4 drehbar gelagert ist. Das Ansaugrohr 3 weist, entsprechend den baulichen Notwendigkeiten, einen geeigneten Querschnitt auf. Im Bereich des Einlaßventils 22 ist im Ansaugrohr 3 ein Einspritzventil 2 vorgesehen, welches mit einer Kraftstoffleitung 20 in Verbindung steht und elektrisch betätigbar ist. Das Einspritzventil 2 bildet zusammen mit der Kraftstoffleitung 20 einen Teil eines Kraftstoffversorgungssystems, welches weiterhin einen Kraftstofftank 21, einen mit diesem in Wirkzusammenhang stehenden Kraftstofffilter 28 sowie eine dem Kraftstofffilter nachgeschaltete Kraftstoffzuleitung 19 aufweist. Die Kraftstoffzuleitung 19 ist mit dem Einlaß 11 einer Kraftstoffpumpe 13 verbunden, die Kraftstoffleitung 20 steht in Verbindung mit einem Auslaß 12 der Kraftstoffpumpe. Die Kraftstoffpumpe 13 weist ein Pumpenrad 6 auf, welches Teil einer Pumpenvorrichtung 5 ist. Das Kraftstoffversorgungssystem pumpt somit Kraftstoff aus dem Kraftstofftank 21 zu dem Einspritzventil 2. Das Einspritzventil 2 steht in elektrischer Verbindung mit einem Schalter 23, welcher das üblicherweise als Magnetventil ausgebildete Einspritzventil 2 in Abhängigkeit von der Öffnung des Einlaßventils 22 öffnet. Die Menge des eingespritzten Kraftstoffes ist proportional zur Menge des durch das Pumpenrad 6 geförderten Kraftstoffs, welche wiederum in oben beschriebenem Wirkzusammenhang mit der Menge an geförderter Verbrennungsluft steht. Bei dem gezeigten Ausführungsbeispiel bewegt sich der Druckunterschied zwischen der Kraftstoffleitung 20 und dem Ansaugrohr 3 in einem Bereich von 8 bis 40 PSI (551 bis 2 757 hPa).

Die Pumpvorrichtung 5, welche das Kraftstoffpumpenrad 6 sowie das Luft-Verdichterrad 7 umfaßt, ist in einem entsprechend vergrößerten Querschnittsbereich des Ansaugrohrs 3 angeordnet. Vor dem Verdichterrad 7 ist ein Luftfilter 27 vorgesehen. Das als Stator des die Pumpvorrichtung 5 bildenden Elektromotors wirkende Verdichterrad 7 pumpt eine entsprechende Luftmenge in das Ansaugrohr 3. Die Drosselklappe 4 steht, ebenso wie ein Potentiometer 17, in Verbindung mit einem nicht dargestellten Gaspedal. Eine Veränderung der Stellung des Gaspedals bewirkt eine Verdrehung der Drosselklappe 4 sowie eine Verstellung des Potentiometers 17. Die Stellung des Potentiometers 17 bestimmt die Drehzahl der Pumpvorrichtung 5, d. h. die relative Drehzahl zwischen den beiden Pumpenrädern 6 und 7. Die Drosselklappe 4 ist beim Betrieb der Verbrennungskraftmaschine so mit der Drehzahl der Pumpvorrichtung 5 gekoppelt, daß sie in dem Ansaugrohr 3 stets einen entsprechenden Strömungsquerschnitt freigibt. An dem Zylinderkopf 38 ist ein Thermostat 29 vorgesehen, welcher in elektrischer Verbindung mit einer Magnetbremse 18 steht, welche auf das Verdichterrad 7 wirkt. Wenn der Zylinderkopf 38 eine Temperatur aufweist, welche unter der Ansprechtemperatur des Thermostaten 29 liegt, wird die Magnetbremse 18 mit Strom beaufschlagt und bremst somit das Verdichterrad 7. Dadurch erhöht sich die Geschwindigkeit des Kraftstoffpumpenrades 6, was zu einem fetteren Verhältnis von Kraftstoff zu Verbrennungsluft führt. Auf diese Weise wird die Verbrennungskraftmaschine während der Kaltlaufphase in einem entsprechenden Mischungsverhältnis mit Kraftstoff und Verbrennungsluft versorgt. Sobald sich die Temperatur des Zylinderkopfes 38 erhöht hat, unterbricht der Thermostat 29 die Stromversorgung zur Magnetbremse 18, so daß das baumäßig eingestellte Verhältnis von Kraftstoff zu Luft durch die Pumpvorrichtung 5 gefördert wird.

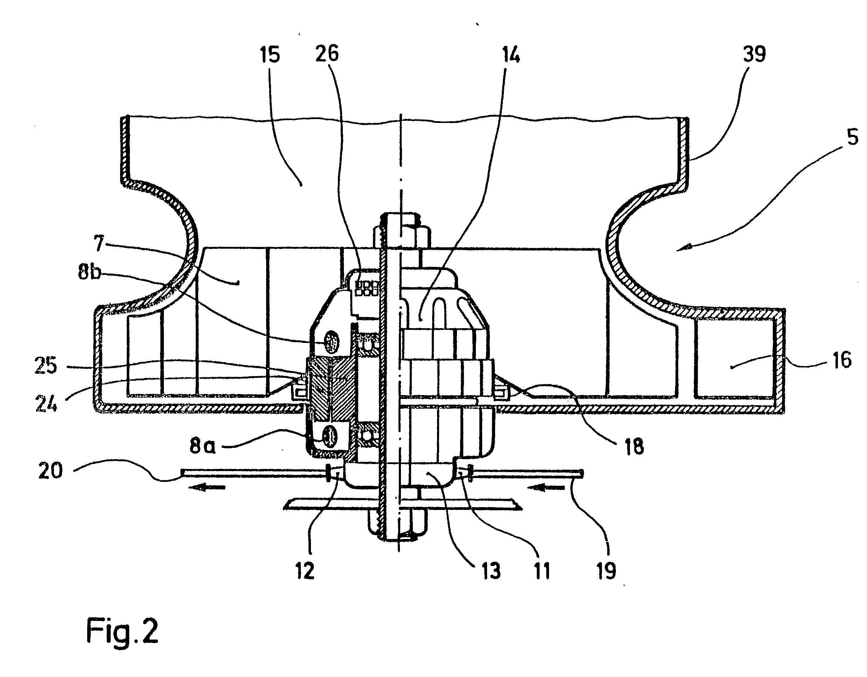

In Fig. 2 ist ein weiteres Ausführungsbeispiel der erfindungsgemäßen Pumpvorrichtung 5 dargestellt. Die Pumpvorrichtung 5 setzt sich aus der Kraftstoffpumpe 13 und dem Verdichter 14 zusammen. Das Pumpenrad der Kraftstoffpumpe 13, deren Einlaß 11 mit der Kraftstoffzuleitung 19 und deren Auslaß 12 mit der Kraftstoffleitung 20 verbunden sind, ist mit dem Rotor 25 des die Pumpvorrichtung 5 bildenden Elektromotors verbunden. Der Stator 24 steht in Verbindung mit dem Verdichterrad 7. Die Pumpvorrichtung weist weiterhin Polträgerteile 8a und 8b auf, welche dem Antrieb von Rotor und Stator dienen. Die Übertragung der elektrischen Energie erfolgt über Schleifringe 26. Die Magnetbremse 18 wirkt in der schon beschriebenen Weise auf den Stator 24 und damit auf das Verdichterrad 7. Das Verdichterrad 7 ist von einem Gehäuse 39 umgeben, welches einen Lufteinlaß 15 und einen Luftauslaß 16 aufweist. Der Luftauslaß 16 steht in nicht dargestellter Verbindung mit dem Ansaugrohr 3.

**0 171 449**

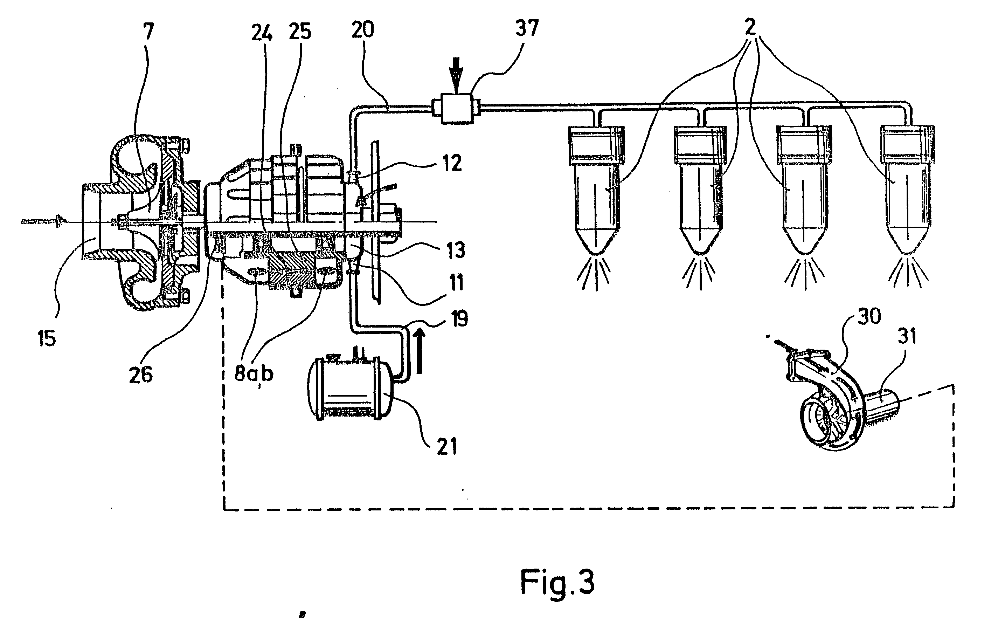

In Fig. 3 ist ein weiteres Ausführungsbeispiel des erfindungsgemäßen Verfahrens zum Zuführen von Kraftstoff und Verbrennungsluft zu einer Verbrennungskraftmaschine dargestellt. In diesem Beispiel ist die Verbrennungskraftmaschine ein im einzelnen nicht weiter dargestellter schwerer Dieselmotor, welcher vier schematisch dargestellte Einspritzventile 2 aufweist, welche mit der Kraftstoffleitung 20 in Verbindung stehen. Zwischen der Kraftstoffleitung 20 und den Einspritzventilen 2 ist ein Drehzahlregler 37 zwischengeschaltet. Von einem Kraftstofftank 21 wird Kraftstoff durch eine Kraftstoffzuleitung 19 einer Kraftstoffpumpe 13 zugeführt, welche Teil der bereits beschriebenen Pumpvorrichtung ist, und an deren Auslaß 12 die Kraftstoffleitung 20 angeschlossen ist. Der Stator 24 der Pumpvorrichtung ist mit dem Verdichterrad 7 einer in Form einer Radialturbine ausgestalteten Verdichteranordnung verbunden. An die nicht gezeigte Abgasleitung der Diesel-Verbrennungskraftmaschine ist eine Abgasturbine 30 angeschlossen, welche mittels der Abgase einen Generator 31 antreibt, welcher in elektrischer Verbindung mit den Schleifringen 26 der Pumpvorrichtung steht. Somit kann der Generator 31 sowohl zur völligen Stromversorgung der Pumpvorrichtung als auch zum Laden einer nicht dargestellten Batterie verwendet werden. Ein derartig ausgebildeter, mit einer Abgasturbine versehener Dieselmotor benötigt, im Gegensatz zu Motoren nach dem Stand der Technik, beim Übergang vom Leerlauf zu einer plötzlich erfolgenden Beschleunigung praktisch keine Reaktionszeit und verfügt sofort über eine ausreichende Menge an Verbrennungsluft und Kraftstoff, die in einem optimalen Verhältnis zueinander stehen. Der bei Dieselmotoren nach dem Stand der Technik bekannte negative Effekt, daß beim Gasgeben große Mengen an unverbranntem Kraftstoff als Ruß aus dem Auspuff ausgeschieden werden, kann bei einer derartigen Maschine nicht auftreten. Auch die Tatsache, daß die Abgasturbine 30 bei Leerlaufdrehzahlen oder niedrigen Drehzahlen nur mit niedrigem Wirkungsgrad arbeitet, hat, bei Verwendung einer zusätzlichen elektrischen Batterie, keinen Einfluß auf die Betriebsweise der Kraftstoff-Luftversorgung.

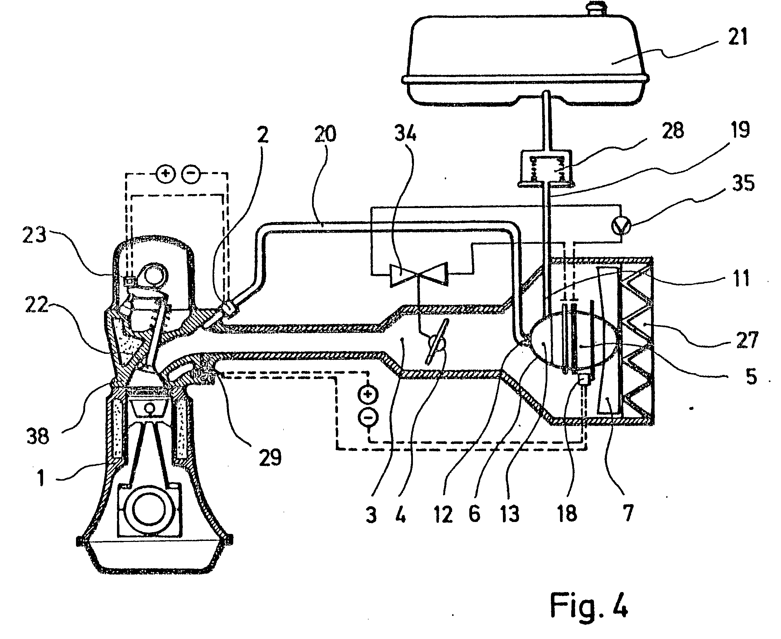

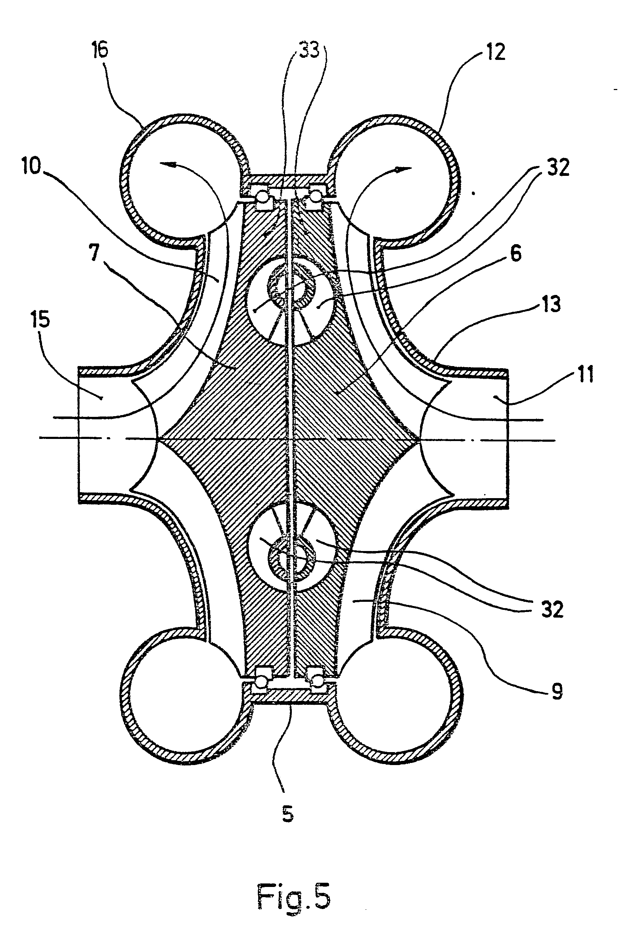

In Fig. 4 ist, analog zu Fig. 1, in schematischer Darstellung eine Verbrennungskraftmaschine dargestellt, welche sich von der Verbrennungskraftmaschine nach Fig. 1 dadurch unterscheidet, daß die Pumpvorrichtung 5, welche aus der Kraftstoffpumpe 13 und einem Verdichter mit dem Verdichterrad 7 zusammengesetzt ist, nicht als Elektromotor sondern als Hydromotor wirkt. Dazu sind, wie nachfolgend in Fig. 5 im einzelnen dargestellt, die Pumpenräder 6 und 7 mit entsprechenden Antriebsströmungskanälen ausgestattet. Anstelle des Potentiometers 17 ist bei diesem Ausführungsbeispiel ein Drosselventil 34 vorgesehen, welches zusammen mit der Drosselklappe 4 von einem nicht dargestellten Gaspedal betätigt wird. Der von der Drosselklappe 4 freigegebene Querschnitt des Ansaugrohrs 3 entspricht hierbei einer entsprechenden Öffnung des Drosselventils 34, um die mittels einer Hydraulikmittelpumpe 35 unter Druck gesetzte Hydraulikflüssigkeit der Pumpvorrichtung 5 zuzuleiten.

Die beiden Pumpenräder 6 und 7 (Strömungskanälen 9 und 10), welche zum Pumpen des Kraftstoff bzw. zum Verdichten der Verbrennungsluft dienen, bilden bei dem in den Fig. 4 bis 6 dargestellten Ausführungsbeispielen miteinander einen Hydromotor 33. Dazu weisen die beiden Pumpenräder 6 und 7 an ihren gegenüberliegenden Flächen entsprechende Antriebsströmungskanäle 32 auf, durch welche Strömungsmittel hindurchgeleitet wird, so daß die Funktion dieser Pumpvorrichtung dieselbe ist wie die der oben beschriebenen Elektropumpvorrichtung. Die Pumpvorrichtung ist bei diesem Ausführungsbeispiel als Radialpumpe, wie sie aus dem Stand der Technik bekannt ist, ausgestaltet.

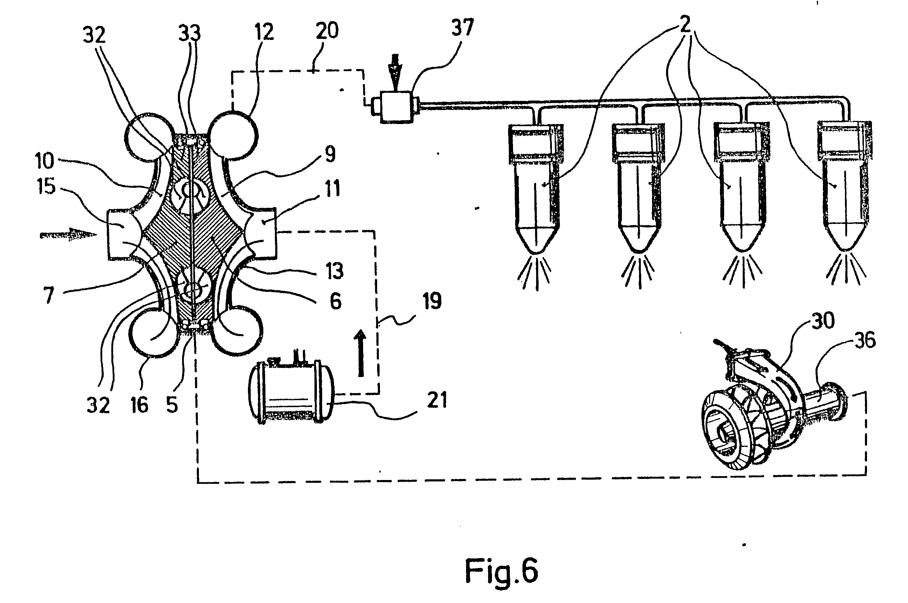

In Fig. 6 ist in einem weiteren Ausführungsbeispiel, analog dem in Fig. 3 dargestellten Ausführungsbeispiel, eine erfindungsgemäße Vorrichtung zum Zuführen von Kraftstoff und Verbrennungsluft zu einer Dieselkraftmaschine dargestellt. Das Ausführungsbeispiel unterscheidet sich von dem in Fig. 3 gezeigten Ausführungsbeispiel dadurch, daß hierbei der in Fig. 5 beschriebene Hydromotor 33, welcher aus den beiden Pumpenrädern 6 und 7 gebildet wird, zur Anwendung kommt. Die mit der Verbrennungskraftmaschine in nicht gezeigter Weise in Verbindung stehende Abgasturbine 30 treibt bei diesem Ausführungsbeispiel eine Hydraulikmittelpumpe 36, welche den Hydromotor 33 mit Hydraulikflüssigkeit versorgt. Diese Versorgung mit Hydraulikflüssigkeit kann entweder nur durch die Hydraulikmittelpumpe 36 oder über eine zusätzliche, nicht dargestellte separate Hydraulikmittelpumpe oder zusätzlich über einen nicht dargestellten Hydraulikmittelspeicher erfolgen.

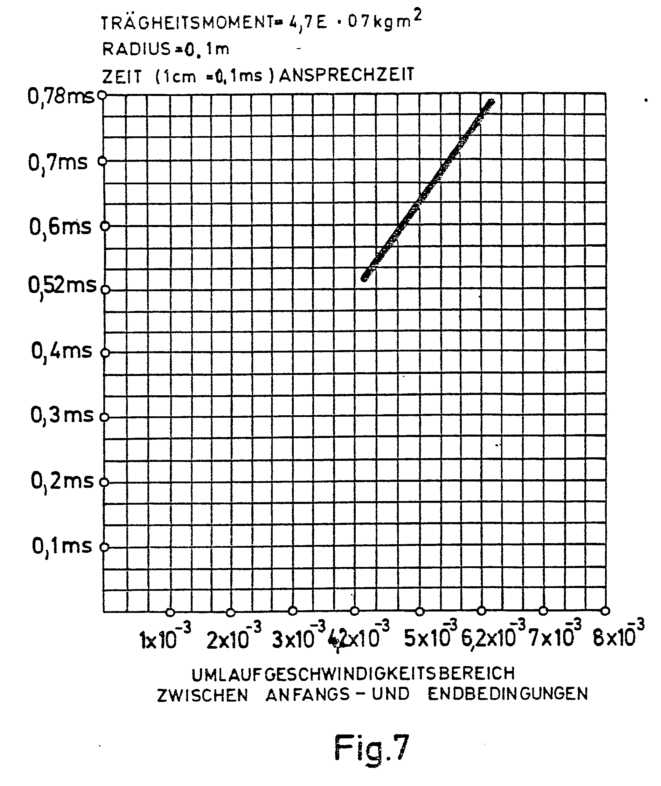

In Fig. 7 ist eine graphische Darstellung der Ansprechzeit der elektrischen Pumpvorrichtung gemäß den Ausführungsbeispielen der Fig. 1 bis 3 aufgezeigt. Zur Verdeutlichung der vorteilhaften Arbeitsweise und der überaus schnellen Ansprechzeit der erfindungsgemäßen Pumpvorrichtung wird im folgenden die Ansprechzeit für ein spezielles Ausführungsbeispiel berechnet. Der Stator des Elektromotors trägt dabei ein Verdichterrad des Typs AE 195-2 EBM. Die Leistung und die Ansprechzeit des Elektromotors genügen dabei folgender Gleichung :

$$P \cdot Rt = 1/2 \cdot I \cdot W^2 \qquad (1)$$

Dabei ist : P die Leistung des Motors mit 67 Watt = 6,7 kp m sec$^{-1}$, die Drehzahl des Motors 2 530 min$^{-1}$, die Drehzahl des Stators 1 500 min$^{-1}$ (Winkelgeschwindigkeit = 157 sec$^{-1}$). Trägheitsmoment von Verdichterrad und Stator :

$$I = 4,7 \cdot 10^{-7} \, Kg \, m^2$$

Rt = Ansprechzeit zum Erreichen der vollen Drehgeschwindigkeit.

Durch Einsetzen der oben angegebenen Zahlenwerte in Gleichung (1) erhält man einen Wert für Rt von :

$$Rt = 8{,}6 \cdot 10^{-4}\ sec\ .$$

Im folgenden wird die Veränderung der kinetischen Energie des Luftstroms mit der Veränderung der Rotationsenergie des Verdichterrades und des Stators gleichgesetzt. Diese Beziehung genügt der folgenden Gleichung :

$$(1/2 \cdot M \cdot V_1{}^2 - 1/2 \cdot M \cdot V_2{}^2) \cdot Rt = 1/2 \cdot I \cdot W_1{}^2 - 1/2 \cdot I \cdot W_2{}^2 \qquad (2)$$

Dabei ist : M = Masse der Luft pro Sekunde

$V_1$ = anfängliche Lufteinströmgeschwindigkeit

$V_2$ = End-Lufteinströmgeschwindigkeit

Rt = Ansprechzeit

I = Trägheitsmoment von Verdichterrad und Stator

$W_1$ = anfängliche Winkelgeschwindigkeit pro Sekunde

$W_2$ = End-Winkelgeschwindigkeit pro Sekunde.

Wird das Umfangsgeschwindigkeitsverhältnis des Verdichterrades gleich 1 gesetzt, so ergibt sich :

$$V = r \cdot W \qquad (3)$$

wobei r = Spitzenradius des Verdichterrades in (r = 0,1 m). Weiterhin besteht die folgende Beziehung :

$$M = \frac{Y \cdot A \cdot V}{g} \qquad (4)$$

M = Luftmasse

Y = Luftdichte = 1,2 Kg m$^{-3}$

A = $\pi \cdot r^2$

g = 9,8 m sec$^{-2}$ (Erdbeschleunigung).

Durch Einsetzen dieser Werte und Gleichungen in die Gleichung (2) ergibt sich :

$$Rt \left( 1/2 \frac{Y \cdot A \cdot r \cdot W_1}{g} (r \cdot W_1)^2 - 1/2 \frac{Y \cdot A \cdot r \cdot W_2}{g} (r \cdot W_2)^2 \right) = 1/2 \cdot I \cdot W_1^2 - 1/2 \cdot W_2^2\ .$$

Durch Auflösen nach Rt ergibt sich :

$$Rt = \frac{2{,}6 \cdot I}{r^5} \cdot \frac{(W_1^2 - W_2^2)}{W_1^3 - W_2^3}$$

Bei Verwendung des oben bezeichneten Verdichterrades vom Typ AE 195-2 EBM, mit r = 0,1 m und I = 4,7 · 10$^{-7}$ kg m$^2$ ist die Ansprechzeit in Fig. 7 dargestellt. Unter Berücksichtigung der oben zitierten Gleichungen und der in Fig. 7 dargestellten Resultate ergibt sich eine äußerst kurze Ansprechzeit der erfindungsgemäßen Pumpvorrichtung, welche in Größenordnungen von zehntausendstel Sekunden liegt.

Das in den Ausführungsbeispielen in Verbindung mit der erfindungsgemäßen Vorrichtung zum Zuführen von Kraftstoff und Verbrennungsluft zu einer Verbrennungskraftmaschine beschriebene Verfahren zur Steigerung des Kraftstoffanteils während der Kaltlaufphase bzw. bis zum Erreichen einer vorgegebenen Motortemperatur ist nicht auf die Anwendung der beschriebenen Magnetbremse zur Verringerung der Drehzahl des Verdichterrads beschränkt. Vielmehr ist es auch möglich, dieselbe Wirkung durch eine entsprechende mechanische oder hydraulische Bremsvorrichtung zu erzielen.

Die in den Ausführungsbeispielen in Zusammenhang mit den Fig. 1 bis 6 gezeigten Vorrichtungen zur Durchführung des erfindungsgemäßen Verfahrens lassen im Rahmen des Erfindungsgedankens noch einen weiten Spielraum für konstruktive Abwandlungen. So ist es beispielsweise möglich, durch eine entsprechende Optimierung des Ansaugrohres die Strömungsverhältnisse im Ansaugrohr und im Bereich des Verdichterrades und der Drosselklappe noch weiter zu optimieren.

Bei Vollgasfahrt ist die Drosselklappe ganz geöffnet und die Pumpvorrichtung wird, im Falle einer einen Elektromotor bildenden Pumpvorrichtung, mit maximalem Strom versorgt und läuft deshalb mit maximaler Leistung. Unter diesen Bedingungen kann die Leistung des Verdichterrades so groß werden, daß die Strömungswiderstände im Ansaugrohr völlig vernachlässigt werden können. Auf diese Weise kann eine noch bessere Versorgung der Verbrennungskraftmaschine mit Kraftstoff und Verbrennungsluft erfolgen. Wird bei einer derartigen Vollgasfahrt eines mit einer erfindungsgemäßen Vorrichtung ausgerüsteten Kraftfahrzeugs plötzlich das Gas gänzlich weggenommen, so schließt die Drosselklappe das Ansaugrohr praktisch völlig ab, was zur Folge hat, daß weder Kraftstoff noch Verbrennungsluft in den Motor gefördert werden, wodurch auf einfachste Weise und ohne Zuhilfenahme irgendwelcher Steuerungs- oder Regelungsbauteile eine Schubabschaltung des Motors bewirkt wird.

Weiterhin ist es möglich, die gezeigten Ausführungsbeispiele der erfindungsgemäßen Vorrichtung so weiterzubilden, daß die verschiedenen Betriebszustände der Pumpvorrichtung eine entsprechende Änderung des Zündzeitpunktes bewirken, um dadurch eine noch bessere Verbrennungscharakteristik zu erreichen.

**Patentansprüche**

1. Verfahren zum Zuführen von Kraftstoff und Luft zu einer Verbrennungskraftmaschine (1), bei dem Kraftstoff zumindest einem Einspritzventil (2) und Verbrennungsluft zumindest einem mit einer Drosselklappe (4) versehenen Ansaugrohr (3) zugeführt wird, dadurch gekennzeichnet, daß dem Ansaugrohr (3) zwangsweise mittels einer ersten in Abhängigkeit von der jeweiligen Stellung der Drosselklappe (4) gesteuerten Pumpeinrichtung (7) eine vorbestimmte Luftmenge und gleichzeitig mittels einer zweiten, mit der ersten Pumpeinrichtung betriebsverbundenen Pumpeinrichtung (6) dem Einspritzventil (2) eine zu der Luftmenge in einem festen, vorgegebenen Verhältnis stehende Kraftstoffmenge zugeführt wird.

2. Verfahren nach Anspruch 1, dadurch gekennzeichnet, daß das Verhältnis von Kraftstoffmenge zu Luftmenge während des Betriebs der Verbrennungskraftmaschine (1) konstant bleibt.

3. Verfahren nach einem der Ansprüche 1 oder 2, dadurch gekennzeichnet, daß das Verhältnis von Kraftstoffmenge zu Luftmenge bis zum Erreichen einer vorgegebenen Motortemperatur auf einen fetteren Wert eingestellt ist.

4. Verfahren nach einem der Ansprüche 1 bis 3, dadurch gekennzeichnet, daß die Gesamtmenge von Kraftstoff und Luft und die Stellung der Drosselklappe (4) zueinander direkt proportional sind.

5. Verfahren nach einem der Ansprüche 1 bis 4, dadurch gekennzeichnet, daß das Verhältnis von Kraftstoff zu Luft ein stöchiometrisches Verhältnis ist.

6. Vorrichtung zum Zuführen von Kraftstoff und Luft insbesonders nach dem Verfahren gemäß einem der Ansprüche 1 bis 5 zu einer Verbrennungskraftmaschine (1), wobei der Kraftstoff zumindest einem Einspritzventil (2) und die Verbrennungsluft zumindest einem mit einer Drosselklappe (4) versehenen Ansaugrohr (3) zugeführt werden, gekennzeichnet durch eine Pumpvorrichtung (5), welche zwei koaxial um eine ideelle Drehachse drehbar angeordnete Pumpenräder (6, 7) ausweist, die in separaten Strömungskanälen (9, 10) angeordnet und die jede mit zusammenwirkenden Polträgerteilen (8a, 8b) versehen sind und die gegenläufigen Teile eines abtriebswellenlosen, ausschließlich zum Antrieb der Pumpenräder (6, 7) dienenden separat antreibbaren Elektromotors bilden, wobei das eine Pumpenrad (6) Teil einer Kraftstoffpumpe (13) ist, deren Auslaß (12) mit mindestens einer Einspritzdüse (2) in Verbindung steht und wobei das zweite Pumpenrad (7) in Form eines im Bereich des Ansaugrohres (3) angeordneten Luft-Verdichterrads ausgebildet ist ; und durch eine Betriebsverbindung zwischen den Pumpenrädern (6, 7) und einem die Stellung der Drosselklappe (4) bestimmenden Stellglied so daß die Pumpvorrichtung (5) in Abhängigkeit von der jeweiligen Stellung der Drosselklappe gesteuert wird, wobei die Drehmomente jedes Pumpenrads (6, 7) gleich, aber einander entgegengesetzt sind und wobei die Gesamtdrehzahl der beiden Pumpenräder (6, 7) gleich bleibt.

7. Vorrichtung nach Anspruch 6, dadurch gekennzeichnet, daß die Pumpenräder (6, 7) in elektrischer Verbindung mit dem die Stellung der Drosselklappe (4) bestimmenden Stellglied stehen.

8. Vorrichtung nach einem der Ansprüche 6 oder 7, dadurch gekennzeichnet, daß das Stellglied in Form eines mit einem Gaspedal gekoppelten Potentiometers (17) ausgebildet ist.

9. Vorrichtung nach einem der Ansprüche 6 bis 8, dadurch gekennzeichnet, daß die Verbrennungskraftmaschine (1) mit einer an sich bekannten Abgasturbine (30) ausgestattet ist, welche in Betriebsverbindung mit einem Generator (31) steht, und daß der Elektromotor in Verbindung mit dem Generator (31) und einer Batterie steht.

10. Vorrichtung zum Zuführen von Kraftstoff und Luft insbesonders nach dem Verfahren gemäß einem der Ansprüche 1 bis 5, zu einer Verbrennungskraftmaschine (1), wobei der Kraftstoff zumindest einem Einspritzventil (2) und die Verbrennungsluft zumindest einem mit einer Drosselklappe (4) versehenen Ansaugrohr (3) zugeführt werden, gekennzeichnet durch eine Pumpvorrichtung (5), welche zwei koaxial um eine ideelle Drehachse drehbar angeordnete Pumpenräder (6, 7) aufweist, die in separaten Strömungskanälen (9, 10) angeordnet und die jede mit zusammenwirkenden Antriebs-Strömungskanälen (32) versehen sind und die gegenläufigen Teile eines abtriebswellenlosen, ausschließlich zum Antrieb der Pumpenräder dienenden, separat antreibbaren Hydromotors (33) bilden, wobei das eine Pumpenrad (6) Teil einer Kraftstoffpumpe (13) ist, deren Auslaß (12) mit mindestens einer Einspritzdüse (2) in Verbindung steht und wobei das zweite Pumpenrad (7) in Form eines im Bereich des Ansaugrohres (3) angeordneten Luft-Verdichterrades ausgebildet ist, und durch eine Betriebsverbindung zwischen den Pumpenrädern (6, 7) und einem die Stellung der Drosselklappe (4) bestimmenden Stellglied so daß die Pumpvorrichtung (5) in Abhängigkeit von der jeweiligen Stellung der Drosselklappe gesteuert wird, wobei die Drehmomente jedes Pumpenrads (6, 7) gleich, aber einander entgegengesetzt sind und wobei die Gesamtdrehzahl der beiden Pumpenräder (6, 7) gleich bleibt.

11. Vorrichtung nach Anspruch 10, dadurch gekennzeichnet, daß die Pumpenräder (6, 7) in hydraulischer Verbindung mit dem die Stellung der Drosselklappe (4) bestimmenden Stellglied stehen.

12. Vorrichtung nach einem der Ansprüche 10 oder 11, dadurch gekennzeichnet, daß das Stellglied in Form eines mit einem Gaspedal gekoppelten Drosselventils (34) ausgebildet ist.

13. Vorrichtung nach einem der Ansprüche 10 bis 12, dadurch gekennzeichnet, daß die Verbrennungskraftmaschine (1) mit einer an sich bekannten Abgasturbine (30) ausgestattet ist, welche in Betriebsverbindung mit einer hydraulischen Hydraulikmittelpumpe (36) steht, und daß die Hydraulikmittelpumpe (36) in Betriebsverbindung mit dem Hydromotor (33) bringbar ist.

14. Vorrichtung nach einem der Ansprüche 6 bis 13, dadurch gekennzeichnet, daß das Verdichterrad (7) mit einer elektrischen Magnetbremse (18) in Wirkzusammenhang bringbar ist, welche in Abhängigkeit von der Zylinderkopftemperatur der Verbrennungskraftmaschine (1) erregbar ist.

15. Vorrichtung nach einem der Ansprüche 6 bis 14, dadurch gekennzeichnet, daß das in der Kraftstoffleitung (20) zwischengeschaltete Einspritzventil (2) in Form einer in Abhängigkeit von der Öffnungsstellung eines Einlaßventils (22) mittels eines Schalters (23) elektrisch betätigbaren Einspritzdüse ausgestaltet ist.

## Claims

1. A method of supplying fuel and air to an internal combustion engine (1) the fuel being supplied to at least one injector (2) and combustion-supporting air being supplied to at least one inlet tube (3) having a throttle valve (4), characterised in that, through the agency of a first pump system (7) controlled in dependence upon throttle valve position, the inlet tube (3) is supplied automatically with a predetermined quantity of air while simultaneously, by means of a second pump system (6) operatively connected to the first pump system (7) the injector (2) is supplied with a quantity of fuel which is in a fixed predetermined relationship to the quantity of air.

2. A method according to claim 1, characterised in that the ratio of fuel quantity to air quantity remains constant during the operation of the engine (1).

3. A method according to claim 1 or 2, characterised in that the ratio of fuel quantity to air quantity is adjusted to a richer value until a predetermined engine temperature is reached.

4. A method according to any of claims 1-3, characterised in that the total quantity of fuel and air and the position of the throttle valve (4) are directly proportional to one another.

5. A method according to any of claims 1-4, characterised in that the ratio of fuel to air is a stoichiometric ratio.

6. An apparatus for supplying fuel and air more particularly by the method according to any of claims 1-5 to an internal combustion engine (1), the fuel being supplied to at least one injector (2) and the combustion-supporting air being supplied to at least one inlet tube (3) having a throttle valve (4), characterised by : a pump device (5) having two pump rotors (6, 7) rotatable around an imaginary rotational axis and disposed in separate flow channels (9, 10) and each having co-operating pole carrier parts (8a, 8b) and effective as parts rotating to opposite hands of a separately drivable electric motor which has no output shaft and which is operative solely to drive the pump rotors (6, 7), one pump rotor (6) being a part of a fuel pump (13) whose outlet (12) communicates with at least injection nozzle (2) while the second pump rotor (7) is in the form of an air-compression rotor disposed near the inlet tube (3) ; and by an operative connection between the pump rotors (6, 7) and a control member which determines the position of the throttle flap (4) so that the pump device (5) is controlled in dependence upon the actual position of the throttle valve (4), the torques of each pump rotor (6, 7) being equal and opposite, the total speed of the two pump rotors (6, 7) remaining the same.

7. An apparatus according to claim 6, characterised in that the pump rotors (6, 7) are in electrical communication with the control member determining throttle valve position.

8. An apparatus according to claim 6 or 7, characterised in that the control member is in the form of a potentiometer (17) coupled with an accelerator pedal.

9. An apparatus according to any of claims 6-8, characterised in that the combustion engine (1) has a known exhaust gas turbine (30) which is operatively connected to a generator (31), and the electric motor is connected to the generator (31) and to a battery.

10. An apparatus for supplying fuel and air more particularly by the method according to any of claims 1-5 to an internal combustion engine (1), the fuel being supplied to at least one injector (2) and the combustion-supporting air being supplied to an inlet tube (3) having a throttle valve (4), characterised by : a pump device (5) having two pump rotors (6, 7) arranged coaxially for rotation around an imaginary rotational axis and disposed in separate flow channels (9, 10) and each having co-operating drive flow channels (32) and being the oppositely rotating parts of a separately drivable hydraulic motor (33) which has no output shaft and which is operative solely to drive the pump rotors, one pump rotor (6) being a part of a fuel pump (13) whose outlet (12) communicates with at least one injector (2) while the second pump rotor (7) is in the form of an air-compressing rotor disposed near the inlet tube (3) ; and by an operative connection between the pump rotors (6, 7) and a control member determining throttle valve position so that the pump device (5) is controlled in dependence upon the actual position of the throttle valve, the torques of each pump rotor (6, 7) being equal but opposite, the total speed of the two pump rotors (6, 7) remaining the same.

11. An apparatus according to claim 10, characterised in that the pump rotors (6, 7) are in hydraulic communication with the control member which determines throttle valve position.

12. An apparatus according to claim 10 or 11, characterised in that the control member is in the form of a throttle valve (34) coupled with an accelerator pedal.

13. An apparatus according to any of claims 10-12, characterised in that the engine (10) has a known exhaust gas turbine (30) which is operatively connected to a hydraulic pump (36) and the same can be brought into operative connection with the rotor (33).

14. An apparatus according to any of claims 6-13, characterised in that the air-compressing rotor (7) can be brought into operative relationship with an electrical magnetic brake (18) energizable in dependence upon the cylinder head temperature of the engine (1).

15. An apparatus according to any of claims 6-14, characterised in that the injector (2) in the fuel line (20) is in the form of an injection nozzle adapted to be actuated electrically by means of a switch (23) in dependence upon the open position of an inlet valve (22).


## Revendications

1. Procédé pour alimenter en carburant et en air un moteur thermique (1), dans lequel il est amené du combustible à au moins un injecteur (2) et de l'air comburant à au moins un tuyau d'aspiration (3) muni d'un papillon (4) ; caractérisé en ce qu'il est amené au tuyau d'aspiration (3) automatiquement, au moyen d'un premier organe de pompage (7) commandé chaque fois en fonction de la position du papillon (4), une quantité prédéterminée d'air et en même temps, au moyen d'un second organe de pompage (6) relié fonctionnellement au premier organe de pompage, à l'injecteur (2) une quantité de combustible qui présente un rapport prédéterminé fixe à la quantité d'air.

2. Procédé selon la revendication 1, caractérisé en ce que le rapport quantitatif combustible-air reste constant au cours du fonctionnement du moteur thermique (1).

3. Procédé selon la revendication 1 ou 2, caractérisé en ce que le rapport quantitatif combustible-air est réglé, jusqu'à ce qu'une température de moteur préétablie soit atteinte, à une valeur correspondant à un mélange plus riche.

4. Procédé selon l'une quelconque des revendications précédentes, caractérisé en ce que la quantité totale de combustible et d'air et la position du papillon (4) sont directement proportionnelles l'une à l'autre.

5. Procédé selon l'une quelconque des revendications précédentes, caractérisé en ce que le rapport entre le combustible et l'air est un rapport stœchiométrique.

6. Dispositif pour alimenter un moteur thermique (1) en combustible et en air, en particulier par le procédé selon l'une quelconque des revendications 1 à 5, dans lequel le combustible est amené à au moins un injecteur (2) et l'air comburant à au moins un tuyau d'aspiration (3) muni d'un papillon (4), caractérisé par un dispositif de pompage (5) comportant deux roues de pompe (6, 7) qui, montées coaxialement de façon à pouvoir tourner autour d'un axe de rotation fictif et disposées dans des canaux d'écoulement séparés (9, 10), sont chacune munies de pièces porte-pôle (8a, 8b) coopérant entre elles et forment les parties tournant en sens inverse l'une par rapport à l'autre d'un moteur électrique qui, démuni d'arbre de sortie, peut être entraîné séparément et sert exclusivement à l'entraînement des roues de pompe (6, 7), l'une (6) des roues de pompe faisant partie d'une pompe à combustible (13) dont la sortie (12) communique avec au moins un injecteur (2) et l'autre roue de pompe (7) étant réalisée sous la forme d'une roue de compresseur d'air montée dans la région du tuyau d'aspiration (3) ; et par une relation fonctionnelle entre les roues de pompe (6, 7) et un organe de réglage déterminant la position du papillon (4), de sorte que le dispositif de pompage (5) est commandé chaque fois en fonction de la position du papillon, les couples des deux roues de pompe (6, 7) étant égaux mais opposés l'un à l'autre et la vitesse de rotation totale des deux roues de pompe (6, 7) restant inchangée.

7. Dispositif selon la revendication 6, caractérisé en ce que les roues de pompe (6, 7) se trouvent en liaison électrique avec l'organe de réglage déterminant la position du papillon (4).

8. Dispositif selon la revendication 6 ou 7, caractérisé en ce que l'organe de réglage est réalisé sous la forme d'un potentiomètre (17) couplé avec une pédale d'accélérateur.

9. Dispositif selon l'une quelconque des revendications 6 à 8, caractérisé en ce que le moteur thermique (1) est équipé d'une turbine à gaz d'échappement (30) connue en soi qui se trouve en relation fonctionnelle avec une génératrice (31) et en ce que le moteur électrique est relié à la génératrice (31) et à une batterie.

10. Dispositif pour alimenter en combustible et en air, en particulier par le procédé selon l'une quelconque des revendications 1 à 5, un moteur thermique (1), dans lequel le combustible est amené à au moins un injecteur (2) et l'air comburant à au moins un tuyau d'aspiration (3) muni d'au moins un papillon (4), caractérisé par un dispositif de pompage (5) comportant deux roues de pompe (6, 7) qui, montées

**0 171 449**

coaxialement de façon à pouvoir tourner autour d'un axe de rotation fictif et disposées dans deux canaux d'écoulement séparés (9, 10), sont chacune munies de canaux de fluide moteur (32) coopérant entre eux et constituent les parties tournant en sens inverse l'une par rapport à l'autre d'un moteur hydraulique (33) qui, démuni d'arbre de sortie, peut être entraîné séparément et sert exclusivement à l'entraînement des roues de pompe, l'une (6) des roues de pompe faisant partie d'une pompe à combustible (13) dont la sortie (12) communique avec au moins un injecteur (2) et l'autre roue de pompe (7) étant réalisée sous la forme d'une roue de compresseur d'air montée dans la région du tuyau d'aspiration (3) ; et par une relation fonctionnelle entre les roues de pompe (6, 7) et un organe de réglage déterminant la position du papillon (4), de sorte que le dispositif de pompage (5) est commandé chaque fois en fonction de la position du papillon, les couples des deux roues de pompe (6, 7) étant égaux mais opposés l'un à l'autre et la vitesse de rotation totale des deux pompes de roue (6, 7) restant inchangée.

11. Dispositif selon la revendication 10, caractérisé en ce que les roues de pompe (6, 7) se trouvent en communication hydraulique avec l'organe de réglage déterminant la position du papillon (4).

12. Dispositif selon la revendication 10 ou 11, caractérisé en ce que l'organe de réglage est réalisé sous la forme d'un étrangleur (34) couplé avec une pédale d'accélérateur.

13. Dispositif selon l'une quelconque des revendications 10 à 12, caractérisé en ce que le moteur thermique (1) est équipé d'une turbine à gaz d'échappement (30) connue en soi qui se trouve en relation fonctionnelle avec une pompe hydraulique (36) à fluide hydraulique et en ce que la pompe à fluide hydraulique (36) peut être mise en communication fonctionnelle avec le moteur hydraulique (33).

14. Dispositif selon l'une quelconque des revendications 6 à 13, caractérisé en ce que la roue de compresseur (7) peut être mise en relation de travail avec un frein électromagnétique (18), lequel peut être excité en fonction de la température de la culasse du moteur thermique (1).

15. Dispositif selon l'une quelconque des revendications 6 à 14, caractérisé en ce que l'injecteur (2) interposé dans le conduit de combustible (20) est réalisé sous la forme d'une buse d'injection pouvant être actionnée électriquement au moyen d'un contacteur (23) en fonction de la position d'ouverture d'une soupape d'admission (22).

12

Fig.1

0 171 449

Fig.2

Fig.3

Fig. 4

Fig.5

Fig.6

0 171 449

Fig.7